(19) Europäisches Patentamt

European Patent Office

Office européen des brevets

(11) EP 1 050 771 A1

(12) EUROPÄISCHE PATENTANMELDUNG

(43) Veröffentlichungstag:
08.11.2000 Patentblatt 2000/45

(51) Int. Cl.$^7$: G02B 21/22

(21) Anmeldenummer: 00108137.1

(22) Anmeldetag: 13.04.2000

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 07.05.1999 DE 19921227

(71) Anmelder: CARL ZEISS JENA GMBH
07745 JENA (DE)

(72) Erfinder:
• Rüdel, Reinhard
  07778 Dorndorf-Steudnitz (DE)
• Luther, Egon
  07751 Cospeda (DE)
• Koschmieder, Ingo
  07743 Jena (DE)
• Müller, Lothar
  07646 Ottendorf (DE)

(54) **Konvergenztubus**

(57)    Die Erfindung bezieht sich auf einen Konvergenztubus für Stereomikroskope, bei dem die beiden Beobachtungsstrahlengänge um einen Konvergenzwinkel $\alpha$ gegeneinander geneigt und in beiden Beobachtungsstrahlengängen Bildumkehrelemente vorgesehen sind.

Erfindungsgemäß sind in beiden Beobachtungsstrahlengängen je vier ebene Reflektoren $R_1$ bis $R_4$ vorgesehen und diese so zueinander angeordnet, daß

- die an den Reflektoren $R_1,R_2$ ein- und ausfallenden Achsenstrahlen (2) in einer gemeinsamen Ebene $E_{1,2}$ liegen,
- die am Reflektor $R_3$ ein- und ausfallenden Achsenstrahlen (2) eine Ebene $E_3$ aufspannen, die mit der Ebene $E_{1,2}$ einen Winkel $\beta_1 = 90° + \alpha/4$ einschließt und
- die am Reflektor $R_4$ ein- und ausfallenden Achsenstrahlen (2) eine Ebene $E_4$ aufspannen, die mit der Ebene $E_3$ einen Winkel $\beta_2 = \alpha/2$ einschließt.

Fig.2

**Beschreibung**

Die Erfindung bezieht sich auf einen Konvergenztubus für Stereomikroskope, bei dem die beiden Beobachtungsstrahlengänge um einen Konvergenzwinkel $\alpha$ gegeneinander geneigt und in beiden Beobachtungsstrahlengängen Bildumkehrelemente vorgesehen sind.

Stereomikroskope bestehen im wesentlichen aus einem Objektiv, einem Tubussystem mit Bildumkehrelementen und den Okularen. Zwischen Objektiv und Tubussystem ist üblicherweise ein Galileisches Fernrohrsystem eingeordnet, dessen Vergrößerung fest oder variabel (Zoom) sein kann. Der Abstand der beiden optischen Achsen der Tubusobjektive ist die Stereobasis.

Es haben sich zwei charakteristische Tubenarten herausgebildet: zum einen der Paralleltubus, bei dem die beiden optischen Achsen parallel austreten, und zum anderen der Konvergenztubus, bei dem die optischen Achsen dem Beobachter um den Konvergenzwinkel $\alpha$ gegeneinander geneigt angeboten werden. Der Konvergenzwinkel $\alpha$ entspricht der Blickrichtung der Augen bei Akkommodation auf einen etwa 250mm entfernten Gegenstand und hat in der Regel einen Betrag zwischen 14° und 16°.

Die ergonomische Gestaltung des Konvergenztubus hat sich aufgrund der Vorteile für den Beobachter zwar bewährt, jedoch ist im Vergleich zu den Paralleltuben ein höherer optischer und damit auch fertigungstechnischer Aufwand erforderlich, denn die Konvergenz der Beobachtungsstrahlengänge setzt voraus, daß die Bildumkehrelemente speziell ausgestaltet und in besonderer Weise zueinander positioniert sind.

Im wesentlichen wird die Konvergenz der Beobachtungsstrahlengänge nach zwei Grundprinzipien erreicht. In einem ersten sind die Konvergenztuben mit herkömmlichen bildaufrichtenden Porroprismen ausgestattet, denen optische Keile, beispielsweise achromatische Keile, vorgesetzt sind.

Beim zweiten Prinzip sind die Konvergenztuben mit modifizierten Porroprismen versehen. Beispielsweise sind in jedem Strahlengang ein 90°-Prisma und nachfolgend mindestens ein von 90° abweichendes Prisma angeordnet. Dabei weicht der 90°-Winkel in der Regel um den halben Konvergenzwinkel $\alpha$ ab.

Auf den beiden vorgenannten Grundprinzipien beruhen Ausgestaltungsvarianten, bei denen die Prismen ganz oder teilweise durch Spiegel ersetzt sind.

Fertigungstechnisch aufwendig ist sowohl das Vorsetzen optischer Keile wie auch die Herstellung von Prismen oder Spiegelbaugruppen mit einem von 90° abweichenden Ablenkwinkel.

Ausgehend davon liegt der Erfindung die Aufgabe zugrunde, einen Konvergenztubus der eingangs genannten Art so weiterzubilden, daß unter Beibehaltung einer hohen Bildgüte der Fertigungsaufwand verringert wird.

Erfindungsgemäß sind in jedem der beiden Strahlengänge eines solchen Konvergenztubus vier ebene Reflektoren $R_1$ bis $R_4$ vorgesehen und diese sowohl zum Zweck der Bildumkehr als auch zur Erzielung des Konvergenzwinkels $\alpha$ so zueinander angeordnet, daß die an den Reflektoren $R_1$ und $R_2$ ein- und ausfallenden Achsenstrahlen in einer gemeinsamen Ebene $E_{1,2}$ liegen, die am Reflektor $R_3$ ein- und ausfallenden Achsenstrahlen eine Ebene $E_3$ aufspannen, die mit der Ebenen $E_{1,2}$ einen Winkel $\beta_1 = 90° + \alpha/4$ einschließt, wobei die von $R_2$ aus- und in $R_3$ einfallenden Achsenstrahlen in der Schnittgeraden der Ebenen $E_{1,2}$ und $E_3$ liegen und die am Reflektor $R_4$ ein- und ausfallenden Achsenstrahlen eine Ebene $E_4$ aufspannen, die mit der Ebene $E_3$ einen Winkel $\beta_2 = \alpha/2$ einschließt, wobei die von $R_3$ aus- und in $R_4$ einfallenden Achsenstrahlen in der Schnittgeraden der Ebenen $E_3$ und $E_4$ liegen.

Damit ergibt sich mit nur wenigen optischen Funktionselementen ein verhältnismäßig einfacher Aufbau, durch den einmal die Bildumkehr und außerdem auch die beabsichtigte Konvergenz der beiden Beobachtungsstrahlengänge erreicht wird.

In einer bevorzugten Ausgestaltung der Erfindung sind die Reflektoren $R_1$ und $R_4$ an 90°-Prismen ausgebildet. Dabei ist in einer besonders bevorzugten Ausgestaltung der Erfindung vorgesehen, daß die Reflektoren $R_1$ und $R_2$ durch die beiden Kathetenflächen eines ersten Prismas $P_1$ und die Reflektoren $R_3$ und $R_4$ jeweils durch die Hypotenusenflächen zweier weiterer Prismen $P_2$ und $P_3$ gebildet sind.

Diese drei Prismen sind erfindungsgemäß so im Strahlengang positioniert, daß der von einem Tubusobjektiv kommende Strahlengang zunächst durch die Hypotenusenfläche in das erste Prisma $P_1$ eintritt, an dessen beiden Kathetenflächen um jeweils 90° umgelenkt wird, durch die Hypotenusenfläche wieder austritt und durch eine erste Kathetenfläche in das zweite Prisma $P_2$ eintritt, nach Reflexion an dessen Hypotenusenfläche durch die zweite Kathetenflächen austritt und danach durch eine erste Kathetenfläche in das dritte Prisma $P_3$ eintritt, dort an der Hypotenusenfläche reflektiert wird und durch die zweite Kathetenfläche des dritten Prismas $P_3$ hindurch zum Okular gelangt.

Der wesentliche Vorteil dieser Ausgestaltung besteht darin, daß sechs baugleiche 90°-Prismen verwendet werden können, was eine Aufwandsreduzierung bei solchen Konvergenztuben insofern zur Folge hat, als einerseits 90°-Prismen ohnehin fertigungstechnisch verhältnismäßig einfach herstellbar sind und andererseits aufgrund der Vielzahl baugleicher Prismen, vor allem bei Serienfertigung von Konvergenztuben, auch noch rationelle Fertigungsmethoden anwendbar sind.

Die Ausrichtung im Strahlengang entsprechend der vorgegebenen Neigungswinkel $\beta_1$ und $\beta_2$ kann zweckmäßig durch Einfügen der drei Prismen

$P_1,P_2,P_3$ in eine paßgenau vorgefertigte Fassung erzielt werden, die über geneigte Anschlagflächen für die Prismen verfügt und in der die Prismen in dieser Neigung zueinander fixierbar sind.

In weiteren zweckmäßigen Ausgestaltungen der Erfindung kann auch noch vorgesehen sein, daß die Prismen jeweils zwischen den Ein- und Austrittsflächen des Strahlenganges miteinander verkittet sind. Denkbar ist es weiterhin, zum Zweck der Streustrahlungsbegrenzung an den Übergängen zwischen den Prismen Blenden einzufügen.

Weiterhin kann der erfindungsgemäße Konvergenztubus vorteilhaft mit einer Schwenkeinrichtung zur Veränderung des Okularabstandes und/oder auch mit einer Schwenkeinrichtung zur Veränderung des Einblickwinkels kombiniert werden. Die Ausführung derartiger Schwenkeinrichtungen ist aus dem Stand der Technik an sich bekannt und muß hier nicht näher erläutert werden. Es sei lediglich darauf hingewiesen, daß die Verschwenkung zur Änderung des Okularabstandes durch Drehung um die optischen Achsen der beiden Tubusobjektive vorgenommen werden sollte.

Im Zusammenhang damit ist es zweckmäßig, die drei Prismen $P_1,P_2,P_3$ in beiden Strahlengängen relativ zum Tubusobjektiv so anzuordnen, daß die optische Achse des Tubusobjektivs bereits in der Ebene $E_{1,2}$ liegt und direkt auf die Hypotenusenfläche des ersten Prismas $P_1$ gerichtet ist.

Die mit der Bezeichnung der Reflektoren $R_1$ bis $R_4$ angegebenen Zahlenfolge kann, ausgehend vom Tubusobjektiv, der Positionierung im Strahlengang entsprechen. Allerdings liegt es aber auch im Rahmen der Erfindung, die Reflektoren $R_1$ bis $R_4$ bzw. Prismen $P_1$ bis $P_3$ in umgekehrter Reihenfolge vorzusehen, wobei dann das vom Tubusobjektiv kommende Licht zunächst durch eine erste Kathetenfläche in das dritte Prisma $P_3$ eintritt, dort an der Hypotenusenfläche reflektiert wird, zur Hypotenusenfläche des zweiten Prismas $P_2$ gelangt, hier wiederum reflektiert wird, dann nacheinander auf die beiden Kathetenflächen des ersten Prismas $P_1$ gerichtet ist und aus diesem austretend zum Okular gelangt. Die Positionierung der drei Prismen $P_1,P_2,P_3$ zueinander bezüglich der Winkel $\beta_1$ und $\beta_2$ muß dabei jedoch erhalten bleiben.

Die Erfindung soll nachfolgend anhand eines Ausführungsbeispieles näher erläutert werden. In den zugehörigen Zeichnungen zeigen

Fig.1 den Gesamtaufbau des erfindungsgemäßen Konvergenztubus mit 90°-Prismen

Fig.2 den Aufbau anhand eines einzelnen Strahlenganges

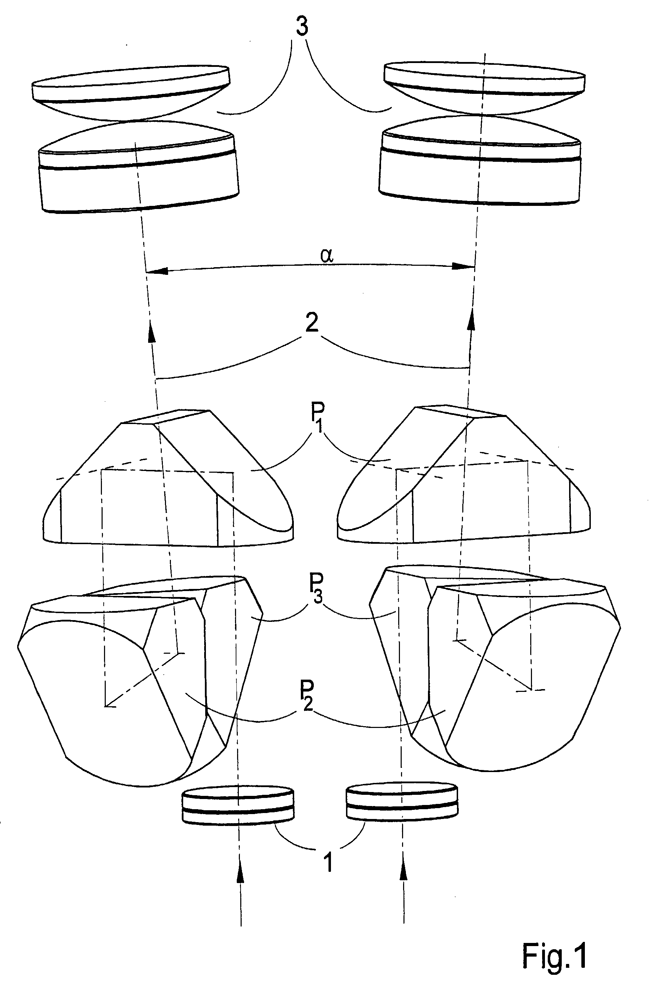

In Fig.1 sind die prinzipiellen Strahlenverläufe in einem Konvergenztubus dargestellt. Dabei wird die Stereobasis durch den Abstand der beiden optischen Achsen der Tubusobjektive 1 gebildet. Die beiden Beobachtungsstrahlengänge, die anhand ihrer Achsenstrahlen 2 dargestellt sind, verlaufen spiegelsymmetrisch zueinander und sind jeweils ausgehend von einem Tubusobjektiv 1 über Bildumkehrelemente auf ein Okular 3 gerichtet.

Da die Anzahl der optischen Baugruppen in beiden Beobachtungsstrahlengängen und auch der Strahlenverlauf identisch sind, werden in der folgenden Erläuterung der Übersichtlichkeit halber für beide Strahlengänge dieselben Bezugszeichen verwendet.

Wie in Fig.1 zu erkennen ist, sind in jedem der beiden Strahlengänge drei 90°-Prismen $P_1,P_2$ und $P_3$ angeordnet. Die Prismen $P_1,P_2$ und $P_3$ sind bezüglich ihrer optischen Parameter wie auch im Hinblick auf ihre Baugröße identisch ausgeführt, so daß im Konvergenztubus sechs baugleiche Prismen vorhanden sind.

Die Prismen $P_1,P_2$ und $P_3$ sind so zueinander angeordnet, daß in bekannter Weise die Bildumkehr erfolgt und das Bild der zu mikroskopierenden Probe im Okular aufgerichtet erscheint.

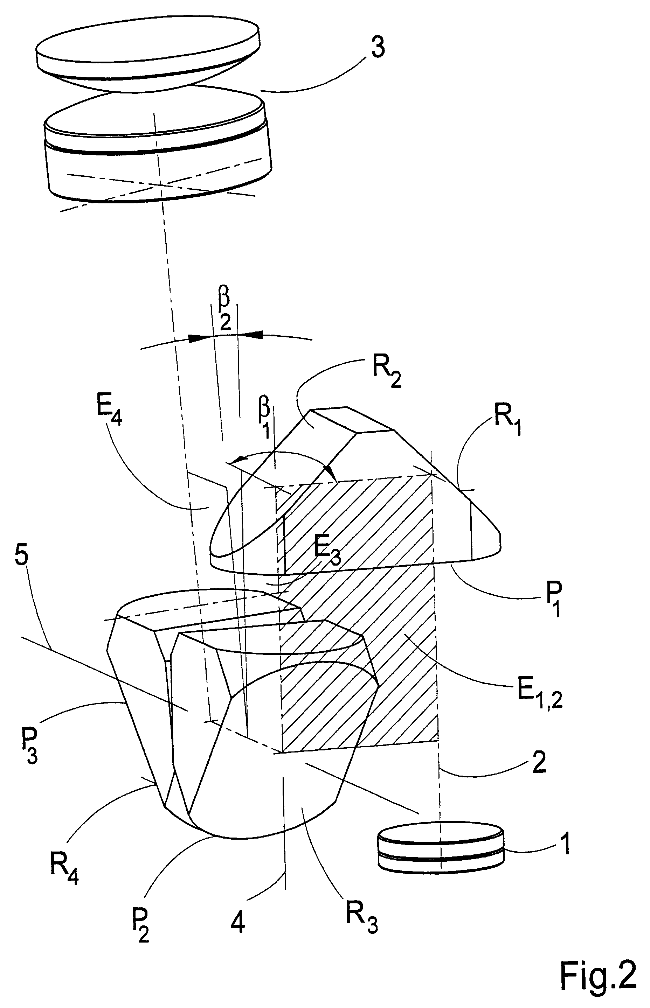

Um nun zu erreichen, daß ohne zusätzliche optische Baugruppen außer der Bildumkehr auch ein Konvergenzwinkel $\alpha$ zustandekommt, ist erfindungsgemäß vorgesehen, die Prismen $P_1,P_2$ und $P_3$ so zueinander zu positionieren, wie das im folgenden anhand Fig.2 gezeigt werden soll.

Zu diesem Zweck ist in Fig.2 einer der beiden Beobachtungsstrahlengänge aus einer Perspektive dargestellt, in welcher die Positionierung der Prismen $P_1,P_2$ und $P_3$ bzw. ihre Ausrichtung zueinander besonders gut zu erkennen ist. Es ist erkennbar, daß der Achsenstrahl 2 nach Durchtritt durch das Tubusobjektiv 1 auf einen ebenen Reflektor $R_1$, nämlich der ersten Kathetenfläche des Prismas $P_1$ trifft, an dem die Umlenkung um 90° in Richtung auf einen Reflektor $R_2$, nämlich die zweite Kathetenfläche desselben Prismas $P_1$ erfolgt. Hier wird der Achsenstrahl 2 wiederum um 90° abgelenkt und tritt dann wieder aus dem Prisma $P_1$ aus.

Von dem in das Prisma $P_1$ ein- und austretenden Achsenstrahl 2 wird eine Ebene $E_{1,2}$ aufgespannt, die für die Ausrichtung des Prismas $P_1$ relativ zu den beiden anderen Prismen $P_2,P_3$ charakteristisch ist. Die Ebene $E_{1,2}$ ist durch Schraffur hervorgehoben.

Der aus Prisma $P_1$ austretende Achsenstrahl 2 tritt durch eine erste Kathetenfläche in das Prismas $P_2$ ein, wird an dessen Hypotenusenfläche (dem Reflektor $R_3$) um 90° umgelenkt und tritt durch die zweite Kathetenfläche aus dem Prisma $P_2$ wieder aus. Dabei spannt der in das Prisma $P_2$ ein- und austretende Achsenstrahl 2 eine Ebene $E_3$ auf, die für die Ausrichtung des Prismas $P_2$ relativ zu den beiden anderen Prismen $P_1,P_3$ charakteristisch ist.

Erfindungsgemäß sind nun die Ebenen $E_{1,2}$ und $E_3$ so zueinander ausgerichtet, daß sie einen Winkel $\beta_1=90°+\alpha/4$ miteinander einschließen, wobei der Achsenstrahl 2 in der Schnittgeraden 4 der beiden Ebenen $E_{1,2}$ und $E_3$ liegt.

Weiter tritt der Achsenstrahl 2 in das Prisma $P_3$ ein, wird an dessen Hypotenusenfläche (dem

Reflektor R$_4$) um 90° umgelenkt und ist von dort zum Okular 3 gerichtet. Der in das Prisma P$_3$ eintretende und aus diesem Prisma P$_3$ austretende Achsenstrahl 2 spannt eine Ebene E$_4$ auf, die für die Ausrichtung des Prismas P$_3$ relativ zu den beiden anderen Prismen P$_1$,P$_2$ charakteristisch ist. Erfindungsgemäß sind die Ebenen E$_3$ und E$_4$ um einen Winkel β$_2$=α/2 gegeneinander geneigt, wobei sie eine gemeinsame Schnittgerade 5 haben, in welcher der Achsenstrahl 2 auf seinem Weg von der Hypotenusenfläche des Prismas P$_2$ zur Hypotenusenfläche des Prismas P$_3$ verläuft.

Mit dieser erfindungsgemäßen Anordnung wird erreicht, daß durch die drei Prismen P$_1$,P$_2$ und P$_3$ nicht nur die Bildumkehr erfolgt, sondern die Beobachtungsstrahlengänge um den Konvergenzwinkel α gegeneinander geneigt sind, wie das in Fig.1 erkennbar ist.

Für den Konvergenzwinkel kann beispielsweise α=16° vorgesehen sein, wobei die Winkel β$_1$ und β$_2$ entsprechend der angegebenen Beziehungen die Werte 94° und 8° annehmen.

Wie schon weiter oben beschrieben, läßt sich so ein Konvergenztubus aufbauen, der aus wenigen gleichen Bauteilen herstellbar und insofern auch kostengünstig ist.

**Bezugszeichenliste**

| | |
|---|---|
| 1 | Tubusobjektive |
| 2 | Achsenstrahl |
| 3 | Okulare |
| 4, 5 | Schnittgeraden |
| R$_1$, R$_2$, R$_3$, R$_4$ | ebene Reflektoren |
| E$_{1,2}$, E$_3$, E$_4$ | Ebenen |
| P$_1$, P$_2$, P$_3$ | Prismen |
| α, β$_1$, β$_2$ | Winkel |

**Patentansprüche**

1. Konvergenztubus für Stereomikroskope, bei dem die Beobachtungsstrahlengänge um einen Konvergenzwinkel α gegeneinander geneigt und in beiden Beobachtungsstrahlengängen Bildumkehrelemente vorgesehen sind, **dadurch gekennzeichnet**, daß in jedem der Beobachstungsstrahlengänge vier Reflektoren R$_1$ bis R$_4$ vorhanden und so zueinander positioniert sind, daß

   - jeder Reflektor R$_1$ bis R$_4$ den Strahlengang um jeweils 90° ablenkt,
   - die bei den Reflektoren R$_1$ und R$_2$ ein- und ausfallenden Achsenstrahlen (2) in einer gemeinsamen Ebene E$_{1,2}$ liegen,
   - die beim Reflektor R$_3$ ein- und ausfallenden Achsenstrahlen (2) eine Ebene E$_3$ aufspannen, die mit der Ebene E$_{1,2}$ einen Winkel

β$_1$=90°+α/4 einschließt, wobei die vom Reflektor R$_2$ aus- und in den Reflektor R$_3$ einfallenden Achsenstrahlen (2) in der Schnittgeraden (4) der Ebenen E$_{1,2}$ und E$_3$ liegen und

   - die beim Reflektor R$_4$ ein- und ausfallenden Achsenstrahlen (2) eine Ebene E$_4$ aufspannen, die mit der Ebene E$_3$ einen Winkel β$_2$=α/2 einschließt, wobei die vom Reflektor R$_3$ aus- und in den Reflektor R$_4$ einfallenden Achsenstrahlen (2) in der Schnittgeraden (5) der Ebenen E$_3$ und E$_4$ liegen.

2. Konvergenztubus nach Anspruch 1, dadurch gekennzeichnet, daß die Reflektoren R$_1$ bis R$_4$ an 90°-Prismen P$_1$,P$_2$,P$_3$ ausgebildet sind.

3. Konvergenztubus nach Anspruch 2, dadurch gekennzeichnet, daß

   - der Strahlengang durch die Hypotenusenfläche in das Prisma P$_1$ eintritt, an dessen beiden Kathetenflächen um jeweils 90° umgelenkt wird und durch die Hypotenusenfläche wieder austritt,
   - dann durch eine erste Kathetenfläche in das zweite Prisma P$_2$ eintritt und nach Reflexion an dessen Hypotenusenfläche durch dessen zweite Kathetenfläche austritt und
   - danach durch eine erste Kathetenfläche in das dritte Prisma P$_3$ eintritt, nach Reflexion an dessen Hypotenusenfläche durch dessen zweite Kathetenfläche wieder austritt und zum Okular (3) gerichtet ist.

4. Konvergenztubus nach Anspruch 3, dadurch gekennzeichnet, daß eine Fassung zur Aufnahme und zur Halterung der Prismen P$_1$,P$_2$,P$_3$ vorgesehen ist, die um die Winkel β$_1$ und β$_2$ gegeneinander geneigte Anlageflächen für die Prismen P$_1$,P$_2$,P$_3$ aufweist.

5. Konvergenztubus nach einem der Ansprüche 2 bis 4, dadurch gekennzeichnet, daß in den Strahlengang zwischen den Prismen P$_1$,P$_2$,P$_3$ Blenden zur Streustrahlungsbegrenzung eingeordnet sind.

6. Konvergenztubus nach einem der Ansprüche 1 ist 4, dadurch gekennzeichnet, daß die Prismen P$_1$,P$_2$,P$_3$ miteinander verkittet sind.

7. Konvergenztubus nach einem der vorgenannten Ansprüche, dadurch gekennzeichnet, daß der Konvergenzwinkel α etwa 14° bis 16° beträgt.

8. Konvergenztubus nach einem der vorgenannten Ansprüche, dadurch gekennzeichnet, daß eine Schwenkeinrichtung zur Veränderung des Okularabstandes und/oder eine Schwenkeinrichtung zur

**EP 1 050 771 A1**

Veränderung des Einblickwinkels vorgesehen ist.

Fig.1

Fig.2

# EP 1 050 771 A1

**Europäisches Patentamt**

## EUROPÄISCHER RECHERCHENBERICHT

Nummer der Anmeldung

EP 00 10 8137

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | CH 500 500 A (WILD HEERBRUGG AG) 29. Januar 1971 (1971-01-29) * Spalte 2, Zeile 11 - Zeile 22; Abbildung 1 * | 1 | G02B21/22 |
| A | DE 35 37 579 A (CANON KK) 24. April 1986 (1986-04-24) * Seite 7, Zeile 23 - Seite 9, Zeile 18; Abbildungen 1,2 * | 1 | |
| A | US 4 009 526 A (ABE KUNIOMI ET AL) 1. März 1977 (1977-03-01) * das ganze Dokument * | 1 | |

| | RECHERCHIERTE SACHGEBIETE (Int.Cl.7) |
|---|---|
| | G02B |

Der vorliegende Recherchenbericht wurde für alle Patentansprüche erstellt

| Recherchenort | Abschlußdatum der Recherche | Prüfer |
|---|---|---|
| DEN HAAG | 22. August 2000 | Sarneel, A |

**ANHANG ZUM EUROPÄISCHEN RECHERCHENBERICHT
ÜBER DIE EUROPÄISCHE PATENTANMELDUNG NR.**

EP 00 10 8137

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2000

| Im Recherchenbericht angeführtes Patentdokument | Datum der Veröffentlichung | Mitglied(er) der Patentfamilie | Datum der Veröffentlichung |
|---|---|---|---|
| CH 500500 A | 15-12-1970 | DE 2021864 A | 14-10-1971 |
| DE 3537579 A | 24-04-1986 | JP 61226723 A<br>JP 61100714 A<br>US 4704012 A | 08-10-1986<br>19-05-1986<br>03-11-1987 |
| US 4009526 A | 01-03-1977 | KEINE | |

Für nähere Einzelheiten zu diesem Anhang : siehe Amtsblatt des Europäischen Patentamts, Nr. 12/82